# EUROPEAN PATENT APPLICATION

(11) **EP 3 961 296 A1**
(43) Date of publication of application: **02.03.2022**
(21) Application number: 21191398.3
(22) Date of filing: 13.08.2021
(51) Int. Cl.: G02C 3/02, A42B 1/247

(54) **CAP WITH GLASSES HOLDER**

(30) Priority: 24.08.2020 KR 20200106267
(71) Applicant: Kim, Yoonjae, Songpa-gu Seoul 05727 (KR)
(72) Inventor: Kim, Yoonjae, Songpa-gu Seoul 05727 (KR)
(74) Representative: Handsome I.P. Ltd

(57) **Abstract**

Disclosed is a cap with a glasses holder which includes a nose support fixing part for holding and fixing a glasses nose support to the cap and temple fixing parts for holding and fixing the temples of the glasses on the cap, so that it is possible to hold and fix the glasses nose support as well as the temples of glasses, thereby firmly fixing the glasses to the cap so that even if a wearer moves his or her head during outdoor activities while wearing the cap, the glasses can be prevented from being separated from the cap, wherein when fixing the glasses on the cap, the glasses can be fixed at any desired position of the front surface, top surface, or rear surface of the cap, respectively, so that various fashion effects can be expected, and when wearing a mask, the mask ear loop can also be held and fixed on the cap so as to be firmly worn, thereby preventing ear pain caused by wearing the mask.

## Description

The present invention relates to a cap with a glasses holder and, more particularly, to a cap with a glasses holder, in which when storing glasses for a while with the cap on, the glasses are hung directly on the cap, thereby not only improving the convenience of storing glasses for users who wear glasses, but also allowing the glasses to be securely hung and stored, wherein the glasses can be hung and stored on the cap in a plurality of directions, greatly improving the sense of fashion, reduction of production cost can be induced through simple configuration, and the glasses are securely hooked to the cap so that activity is not restricted.

In general, people wear caps to protect the head from sunlight or for a fashion sense of the head. The cap to be worn is used to block the strong sunlight on the face with a shade part usually equipped on the front side, keep the hair neat and tidy, and create a beautiful appearance as a part of fashion.

In addition, people wear sunglasses when doing outdoor activities, to protect one's eyesight from strong sunlight or to protect glare, or wear glasses according to their eyesight.

When the cap and the glasses are worn at the same time, the glasses cannot be stored separately, so there is a problem in that the glasses are scratched or damaged because they are held in the hand or stored in the pocket of clothes.

Accordingly, when the cap is worn, the glasses are temporarily hung and stored on the top surface of the cap, wherein since there is no fixation for the glasses that are hung and stored on the cap top surface, it is common for the glasses to fall out of the cap due to movement during outdoor activities.

In addition, if the sunglasses are hung on the cap for a sense of fashion, there is also a problem that the sunglasses fall from the cap while moving since no separate fixation for the sunglasses is provided.

Moreover, in recent years, various outdoor sports have been activated, and accordingly, various equipment for skin and eyesight protection are being worn. Caps and sunglasses or goggles are essential equipment to protect the skin and eyesight from sunlight. When changing wearing status of sunglasses or goggles by temporarily taking them off over the cap while wearing the sunglasses or goggles during outdoor activities, since the sunglasses or goggles are simply placed over the cap, there is a problem that the sunglasses or goggles fall out of the cap according to the movement of the wearer frequently.

Meanwhile, various techniques have been derived to solve these problems.

As an embodiment, a cap for hanging glasses has been suggested in Korean Utility Model Publication No. 20-2019-0001602, in which the cap for hanging glasses includes a cap designed to be worn by a wearer so as to protect the skin and eyesight from the sun's UV rays, and glasses holders, which are arranged to correspond to each other on both side surfaces of the cap and provided to hang and fix the temples of glasses in a state where the templates are inserted, wherein the glasses holder includes an upper seam, a lower seam and a holding seam, the upper and lower seams being sewn along the periphery of the glasses holder at the upper and lower portions thereof so as to form an insertion passage of a temple, and the holding seam being sewn in a reversed V shape (Λ on the surface of the glasses holder so as to hold and fix the temple.

In the prior art having such a configuration, the temple inserted into the glasses holder is held by the holding seam so that the glasses are not arbitrarily separated after being placed on the cap, thereby ensuring a strong fixing force for the glasses during outdoor activities accompanied by movement.

However, this prior art still has a problem in that since the glasses are fixed only with the temple parts, the nose support part of the glasses or the rim part for holding the lenses of the glasses is moved from the cap while shaking during the movement of a wearer, and accordingly the temples hung on the glasses holders are also moved and removed from the glasses holders.

In addition, the prior art has a further problem in that since the temple parts are fixed so that the nose support of the glasses and the rim part for holding the lenses of the glasses are always positioned on the shade part of the cap, it is not possible to satisfy consumers' desire to show a variety of fashion sense by hanging the glasses in a plurality of directions on the cap.

As another embodiment, in Korean Reg. Patent Publication No. No. 10-0936226 is disclosed a combination structure of glasses and a hat or sun cap, the hat or sun cap having a shade part formed on the front, and the glasses having a glass frame and temples connected to the supports formed on both sides of the glass frame, in which the glasses includes a female attachment member, which is provided on one surface of each of the supports formed on both sides of the glass frame and has an insertion groove of a predetermined depth formed in the center and a first gear tooth formed on the surface around the insertion groove, a male attachment member, which is provided on one surface of each of the temples of the glasses and has a protrusion formed in the center so as to be detachably inserted into the insertion groove of the female attachment member and a second gear tooth formed on the surface around the protrusion so as to be rotatably engaged with the first gear tooth, and an attachment member comprising a connecting member of which both ends are respectively connected to the insertion groove of the female attachment member and the protrusion of the male attachment member, wherein the temples of the glasses are configured to be fixed vertically by rotating along the male attachment member and then pass through the shade part so as to be fixed in a folded state on the top surface of the shade part.

However, this prior art configuration still has problems in that consumers are burdened with the purchase cost due to its very complex structure, it is difficult to store the glasses when the glasses are not worn.

It is not possible to create a variety of fashion sense since the glasses are fixed to the cap while wearing the glasses, and it is not possible to create a variety of fashion sense.

In addition, the prior art has a further problem in that when a user wearing a cap and glasses has to wear a mask, the wearer's ear pulling pain is caused by wearing the mask for a long time since the mask has no choice but to be worn over the ears.

The present invention has an object to provide a cap with a glasses holder, in which when storing the glasses on the cap, the glasses can be stored in a plurality of directions so that the glasses are positioned on the top portion or a rear portion of the cap as well as the front portion of the cap. In addition, as it is fixed firmly, various fashion senses can be produced by cap and glasses. By fixing the nose support of the glasses to the cap as well as the temples, it is possible to prevent in advance that the glasses are separated from the cap when doing outdoor activities. Also, the convenience of glasses storage for users who wear glasses may be improved, inducing reduction of production cost by simple configuration. As the glasses are securely fastened to the cap, activities are not restricted.

In order to provide the above mentioned objectives, according to the present invention, in a cap having a shade part that blocks sunlight and a glasses holder part on which the glasses are hung, a cap with a glasses holder characterized in that the glasses holder part includes: one or more nose support fixing parts to which the nose support of the glasses is hung and fixed; and a temple fixing part on which a temple of the glasses is hung and fixed, and the one or more nose support fixing parts is provided on any one surface of the front surface of the cap so that the hung and fixed glasses are positioned on the front side of the cap, the top surface of the cap so that the hung and fixed glasses are positioned on top of the cap, and the rear surface of the cap so that the hung and fixed glasses are positioned on the rear side of the cap, or is provided on the front surface of the cap, the top surface of the cap, and the rear surface of the cap, respectively.

In addition, the nose support fixing part includes: a first Velcro part sewn to the cap; and a second Velcro part, of which one side is sewn and fixed to the first Velcro part, and the other side is attached to the first Velcro part after covering the nose support of the glasses positioned on the first Velcro part, and the temple fixing part includes: a first temple fixing part formed through a side surface of the cap so that a temple is inserted into the temple first temple fixing part; and a second temple fixing part formed through the side surface of the cap so as to be positioned at one side of the first temple fixing part, so that the temple inserted into the first temple fixing part is withdrawn through the second temple fixing part so as to be hung and fixed to the side surface of the cap.

Further, a mask holding part on which a mask ear loop is hung is provided on the side surface of the cap, and the mask holding part includes: a coupling surface fixed to the side surface of the cap by pin-coupling; and a hook surface extending from the coupling surface and bent towards the rear surface side of the cap so that the mask ear loop worn is hung.

According to the present invention, a cap with a glasses holder includes a nose support fixing part for holding and fixing a glasses nose support to the cap and temple fixing parts for holding and fixing the temples of the glasses on the cap, so that it is possible to hold and fix the glasses nose support as well as the temples of glasses, thereby firmly fixing the glasses to the cap so that even if a wearer moves his or her head during outdoor activities while wearing the cap, the glasses can be prevented from being separated from the cap. In addition, when fixing the glasses on the cap, the glasses can be fixed at any desired position of the front surface, top surface, or rear surface of the cap, respectively, so that various fashion effects can be expected, and when wearing a mask, the mask ear loop can also be held and fixed on the cap so as to be firmly worn, thereby preventing ear pain caused by wearing the mask.

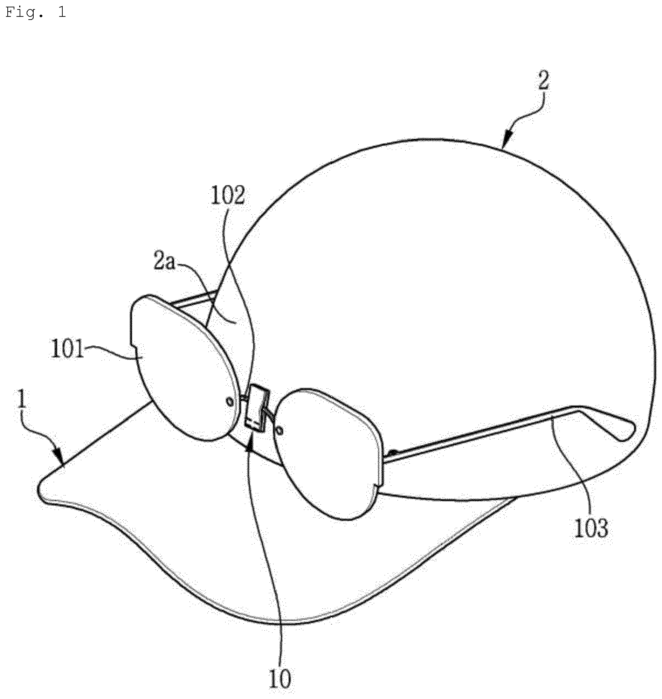

Fig. 1 is a perspective view showing a cap with a glasses holder according to an embodiment of the present invention.
Fig. 2 is a configuration diagram showing a state, in which the glasses are hung and fixed to the cap with a glasses holder according to an embodiment of the present invention.

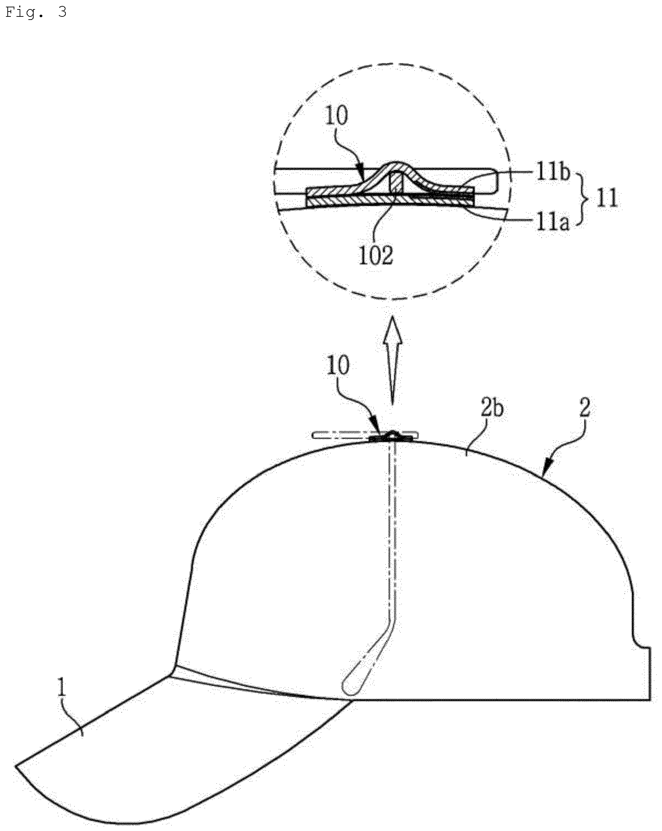

Fig. 3 is a configuration diagram showing a state, in which the glasses are hung and fixed to the cap with a glasses holder according to another embodiment of the present invention.

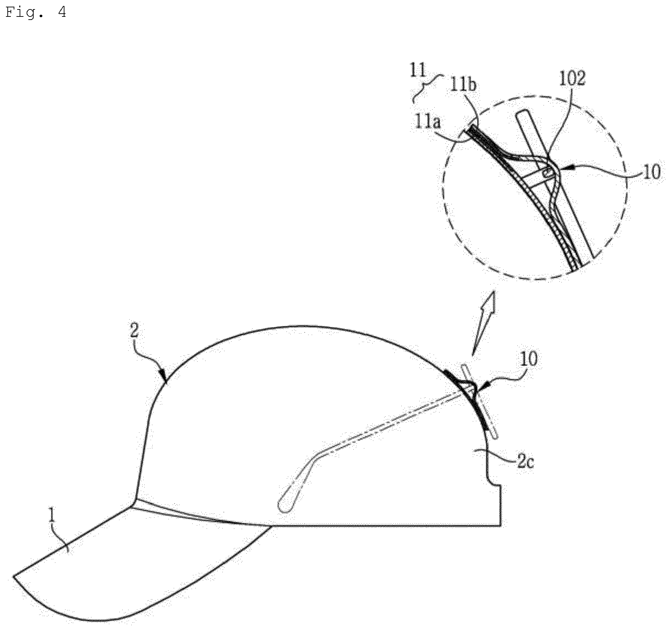

Fig. 4 is a configuration diagram showing a state, in which the glasses are hung and fixed to the cap with a glasses holder according to a further embodiment of the present invention.

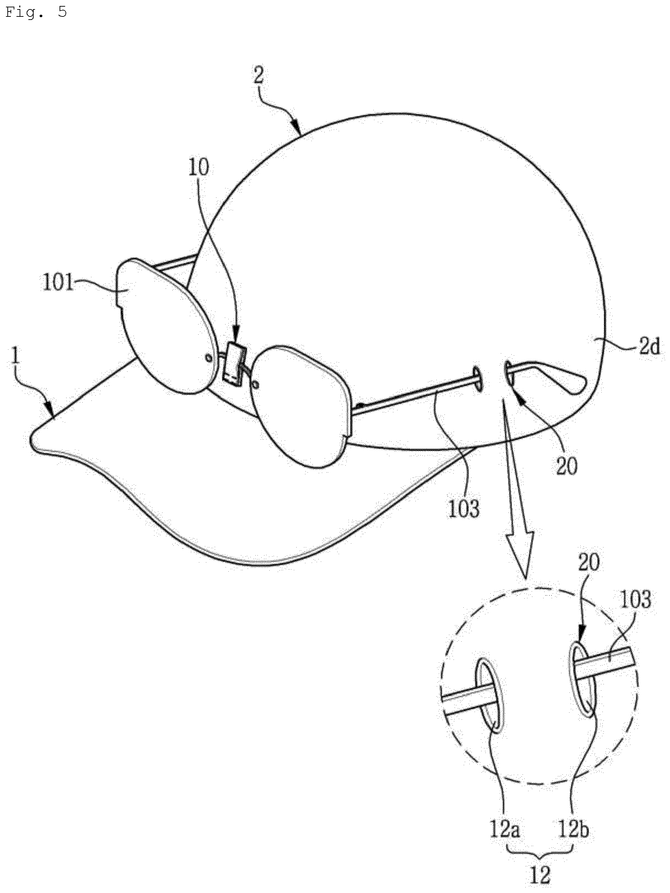

Fig. 5 is a perspective view showing a cap with a glasses holder according to another embodiment of the present invention.

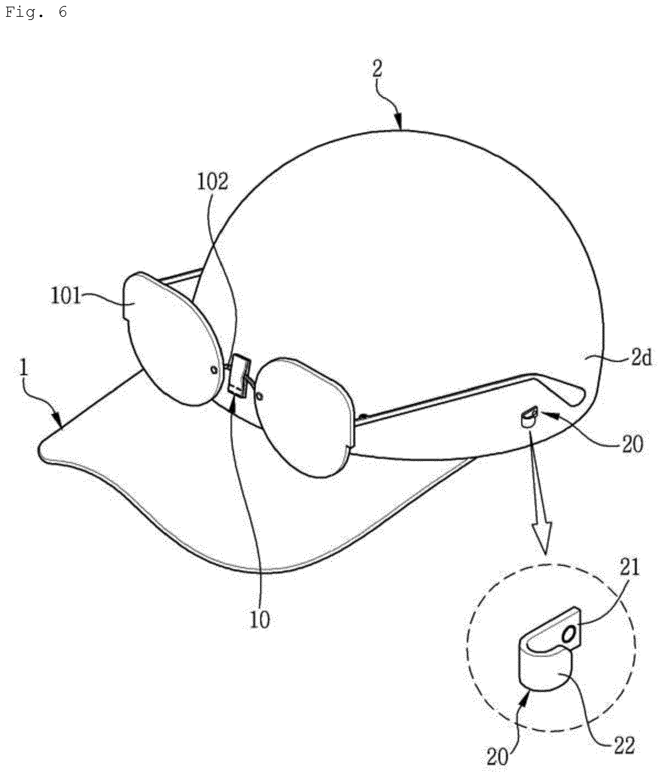

Fig. 6 is a perspective view showing a cap with a glasses holder according to a further embodiment of the present invention.

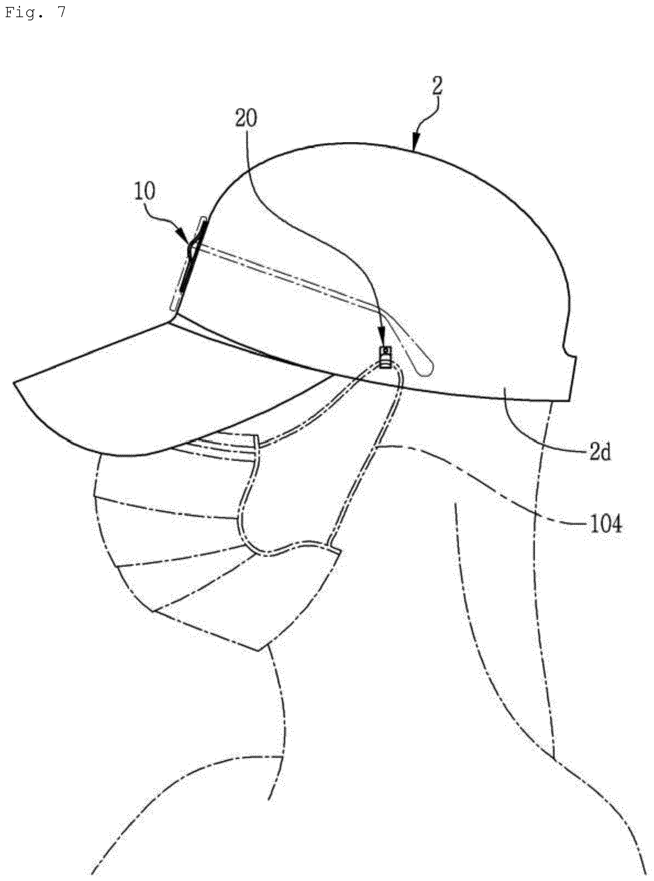

Fig. 7 is a use state diagram showing the cap with a glasses holder according to the further embodiment of the present invention.
Fig. 8 and Fig. 9 are an exploded perspective view and a use state diagram of a cap with a glasses holder according to still another embodiment of the present invention, respectively.

Hereinafter, other objects and features of the present invention in addition to the above object will become apparent through the description of the embodiments with reference to the accompanying drawings.

Unless defined otherwise, all terms used herein, including technical and scientific terms, have the same meaning as commonly understood by a person skilled in the art to which this invention belongs. Terms such as those defined in a commonly used dictionary should be interpreted as having a meaning consistent with the meaning in the context of the related art and are not to be construed in an ideal or overly formal sense unless explicitly defined in this application.

Hereinafter, a cap with a glasses holder according to an embodiment of the present invention will be described in more detail with reference to the accompanying drawings. As shown, the present invention relates to a cap 2 having a shade part 1 that blocks sunlight and a glasses holder 10 on which the glasses 101 are hung.

The cap 2 of the present invention is worn by a wearer on the head, wherein the shade part 1 is positioned on the upper side of the wearer's face so as to protect the wearer's skin and eyesight from strong sunlight, and since the action of the cap 2 is the same as that of a general cap, a detailed description thereof will be omitted.

The cap 2 of the present invention is made to firmly hold and fix the glasses 101 with respect to the cap 2 while the wearer wearing the cap hangs and fixes the glasses 101 on the cap 2, so that even if the wearer moves or shakes the head when walking or running after hanging and fixing the glasses 101 while wearing the cap 2, the glasses 101 are prevented from falling apart from the cap 2.

To this end, the glasses holder 10 provided on the cap 2 of the present invention includes a nose support fixing part 11 to which the nose support 102 of the glasses 101 is hung and fixed, and temple fixing parts 12 on which the temples 103 are hung and fixed.

As described, since the glasses holder 10 provided on the cap 2 includes the nose support fixing part 11 and the temple fixing parts 12, when the glasses 101 are hung on the cap 2, the nose support 102 of the glasses 101 and the temples 103 of the glasses 101 are hung and fixed at the same time so that the glasses 101 can be firmly fixed to the cap 2 and prevented from falling apart.

In addition, the cap 2 of the present invention allows the wearer to hang and fix the glasses 101 on the top surface or the rear surface as well as the front surface of the cap 2 so that a variety of fashion directing effects can be expected as the worn cap 2 and glasses 101 harmonize.

To this end, the nose support fixing part 11 of the present invention is provided on any one surface of the front surface 2a of the cap 2 so that the hung and fixed glasses 101 are positioned on the front side of the cap 2, the top surface 2b of the cap 2 so that the hung and fixed glasses 101 are positioned on top of the cap 2, and the rear surface 2c of the cap 2 so that the hung and fixed glasses 101 are positioned on the rear side of the cap 2.

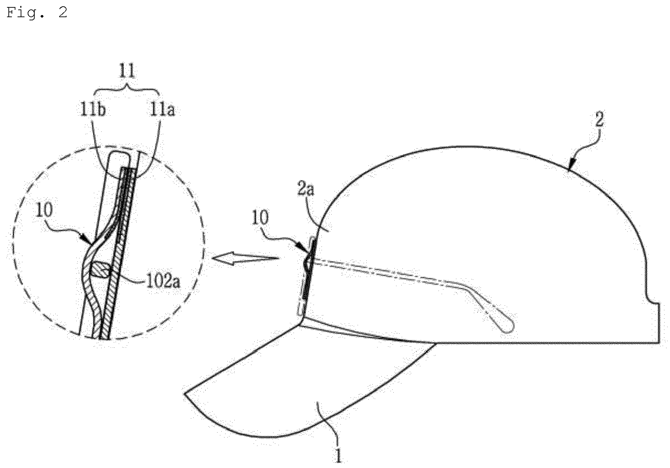

Of course, such a nose support fixing part 11 may be provided on the front surface 2a of the cap 2, the top surface 2b of the cap 2, and the rear surface 2c of the cap 2, respectively. In this way, the nose support 102 of the glasses 101 can be hung and fixed on the nose support fixing part 11 provided on any one of the front surface 2a, top surface 2b, and rear surface 2c of the cap 2, the nose support 102 of the glasses 101 can be firmly hung and fixed when hanging and fixing the glasses 101 on the front surface 2a of the cap 2 as shown in Fig. 2, or when hanging and fixing the glasses 101 on the top surface 2b of the cap 2 as shown in Fig. 2, or when hanging and fixing the glasses 101 on the rear surface 2c of the cap 2 as shown in Fig. 2.

Accordingly, when the wearer creates various fashion effects by using the cap 2 and the glasses 101, the position of the glasses 101 can be fixed by hanging them in a plurality of directions with respect to the cap 2. Therefore, regardless of the position of the glasses 101, the glasses 101 can be firmly hung and fixed to the cap 2, thereby satisfying the wearer's various fashion needs.

The nose support fixing part 11 of the present invention may be variously modified.

As an embodiment, the nose support fixing part 11 includes a first Velcro part 11a sewn to the cap 2 and a second Velcro part 11b, of which one side is sewn and fixed to the first Velcro part 11a, and the other side is attached to the first Velcro part 11a after covering the nose support 102 of the glasses 101 positioned on the first Velcro part 11a.

Of course, the first Velcro part 11a may be fixed to the cap 2 with various fixing means such as Velcro tape or buttons or double-sided tape instead of sewing, that is, needlework. In the present invention configured as described above, while the nose support 102 of the glasses 101 is positioned on the first Velcro part 11a, the nose support 102 of the glasses 101 is covered with the second Velcro part 11b, of which one side is sewn and fixed to the first Velcro part 11a, and then the other side of the second Velcro part 11b is attached and fixed to the first Velcro part 11a so that the nose support 102 of the glasses 101 is firmly hung and fixed to the cap 2.

The temple fixing part 12 of the present invention includes a first temple fixing part 12a formed through a side surface 2d of the cap 2 so that a temple 103 is inserted into the temple first temple fixing part 12a, and a second temple fixing part 12b formed through the side surface 2d of the cap 2 so as to be positioned at one side of the first temple fixing part 12a, so that the temple 103 inserted into the first temple fixing part 12a is withdrawn through the second temple fixing part 12b so as to be hung and fixed to the side surface 2d of the cap 2.

Of course, the temple fixing part 12 may be variously implemented in various ways, such as a pocket type, a hook-shaped clip type, or the like on the side surface 2d of the cap 2. In the present invention described as above, it is possible to more firmly fix the glasses 101 with respect to the cap 2 by hanging and fixing the temples 103 of the fixed glasses 101 to the nose support fixing part 11 of the glasses holder 10 provided on the cap 2.

Explaining the method of fixing the temple 103 to the temple fixing part 12, the temple 103 is first inserted into the first temple fixing part 12a so as to be placed inside the cap 2, and then the temple 103 is withdrawn again through the second temple fixing part 12b, thereby being fixed. Therefore, the glasses 101 can be firmly hung and fixed in this simple structure.

According to the present invention, a mask holding part 20 on which a mask ear loop 104 of a mask is hung is provided on the side surface 2d of the cap 2.

The mask holding part 20 includes a coupling surface 21 fixed to the side surface 2d of the cap 2 by pin-coupling, and a hook surface 22 extending from the coupling surface 21 and bent towards the rear surface 2c side of the cap 2 so that the mask ear loop 104 worn is hung.

The reason for pin-coupling the coupling surface 21 of the mask holding part 20 to the side surface 2d of the cap 2 is to prevent the mask ear loop 104 from breaking by allowing the coupling surface 21 of the mask holding part 20 to rotate and move together with the mask er strap 104 even if the mask ear loop 104 moves in response to the movement of the wearer wearing the mask by hanging the mask ear loop 104 on the hook surface 22.

Since the mask holding part 20 is provided on the side surface 2d of the cap 2 as described above, when the wearer wearing the cap 2 wears the mask, the mask ear loop 104 is hung on the hook surface 22 of the mask holding part 20 instead of the wearer's ear, so that it is possible to prevent in advance the pain of the mask pulling on the ear when the mask ear loop 104 is worn on the ear and thus there is no discomfort at all while wearing the mask for a long time.

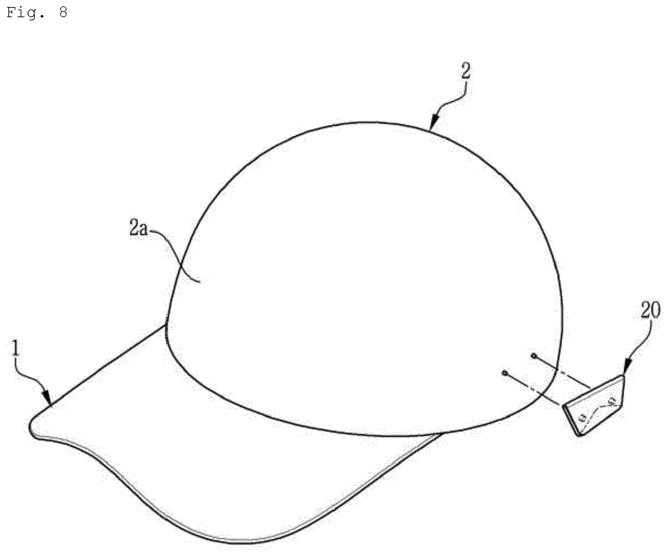

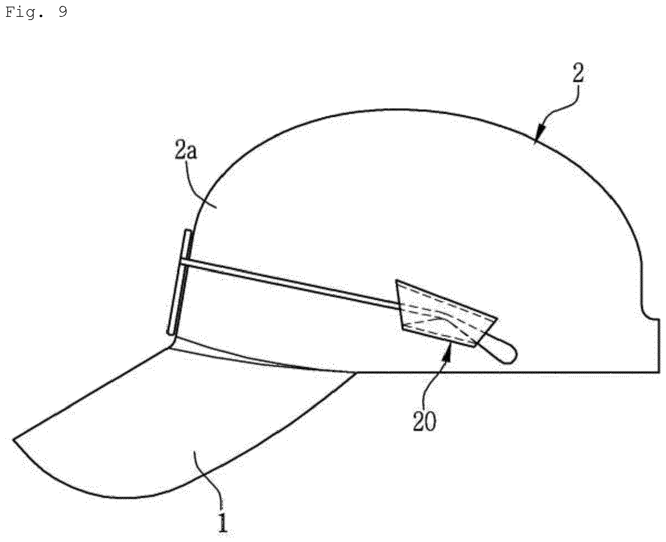

According to the present invention, the mask holding part 20, may be provided on the side surface 2d of the cap 2 in the form of a Velcro tape coupled by sewing or pin-coupling, as shown in Fig. 8 and Fig. 9.

In addition, the mask holding part 20 may be provided in the form of one pair of snap buttons and may be variously modified.

As described above, the present invention has been described with specific features such as specific components and limited embodiments and drawings, but these are only provided to help a more general understanding of the present invention, and the present invention is not limited to the above embodiments. Various modifications and variations are possible from the description by a person skilled in the art to which the present invention belongs.

Accordingly, the spirit of the present invention should not be limited to the described embodiments, and not only the claims to be described below, but also all those with equivalent or equivalent modifications to the claims will fall within the scope of the spirit of the present invention.

**Brief Explanation of Reference Symbols**

| | |
|---|---|
| 10: glasses holder | 11: nose support fixing part |
| 11a: first Velcro part | 11b: second Velcro part |
| 12: temple fixing part | 12a: first temple fixing part |
| 12b: second temple fixing part | 20: mask holding part |
| 21: coupling surface | 22: hook surface |
| 101: glasses | 102: nose support |
| 103: temple | 104: mask ear loop |

## Claims

1. In a cap (2) having a shade part (1) that blocks sunlight and a glasses holder part (10) on which the glasses (101) are hung, a cap with a glasses holder **characterized in that**: the glasses holder part (10) includes one or more nose support fixing parts (11) to which the nose support (102) of the glasses (101) is hung and fixed, and a temple fixing part (12) on which a temple (103) of the glasses (101) is hung and fixed; and the one or more nose support fixing parts (11) is provided on any one surface of the front surface (2a) of the cap (2) so that the hung and fixed glasses (101) are positioned on the front side of the cap (2), the top surface (2b) of the cap (2) so that the hung and fixed glasses (101) are positioned on top of the cap (2), and the rear surface (2c) of the cap (2) so that the hung and fixed glasses (101) are positioned on the rear side of the cap (2), or is provided on the front surface (2a) of the cap (2), the top surface (2b) of the cap (2), and the rear surface (2c) of the cap (2), respectively.

2. The cap with a glasses holder according to claim 1, wherein the nose support fixing part (11) includes: a first Velcro part (11a) sewn to the cap (2); and a second Velcro part (11b), of which one side is sewn and fixed to the first Velcro part (11a), and the other side is attached to the first Velcro part (11a) after covering the nose support (102) of the glasses (101) positioned on the first Velcro part (11a), and the temple fixing part (12) includes: a first temple fixing part (12a) formed through a side surface (2d) of the cap (2) so that a temple (103) is inserted into the temple first temple fixing part (12a); and a second temple fixing part (12b) formed through the side surface (2d) of the cap (2) so as to be positioned at one side of the first temple fixing part (12a), so that the temple (103) inserted into the first temple fixing part (12a) is withdrawn through the second temple fixing part (12b) so as to be hung and fixed to the side surface (2d) of the cap (2).

3. The cap with a glasses holder according to claim 1, wherein a mask holding part (20) on which a mask ear loop (104) is hung is provided on the side surface (2d) of the cap (2), and the mask holding part (20) includes: a coupling surface (21) fixed to the side surface (2d) of the cap (2) by pin-coupling; and a hook surface (22) extending from the coupling surface (21) and bent towards the rear surface (2c) side of the cap (2) so that the mask ear loop (104) worn is hung.

4. The cap with a glasses holder according to claim 1, wherein the mask holding part (20) is provided in the form of a Velcro tape that is coupled to the side surface (2d) of the cap (2) by sewing or pin-coupling.
